# FASCICULE DE BREVET EUROPEEN

(11) **EP 2 635 393 B1**
(45) Date de publication et mention de la délivrance du brevet: **16.01.2019**
(21) Numéro de dépôt: 11832136.3
(22) Date de dépôt: 28.10.2011
(51) Int. Cl.: B23B 29/14, B23B 31/08, B23C 3/12, B23P 13/02

(54) **PROCÉDÉ D'USINAGE D'UN CARTER D'UN TURBOMOTEUR D'AÉRONEF ET OUTIL DE GRATTOIR POUR LA MISE EN OEUVRE DU PROCÉDÉ**
VERFAHREN ZUR BEARBEITUNG EINES GEHÄUSES EINES FLUGZEUGTURBOMOTORS UND ABSTREIFWERKZEUG ZUR DURCHFÜHRUNG DIESES VERFAHRENS
METHOD FOR MACHINING A CASING OF AN AIRCRAFT TURBOSHAFT ENGINE AND SCRAPER TOOL FOR IMPLEMENTING SAID METHOD

(30) Priorité: 02.11.2010 FR 1058983
(43) Date de publication de la demande: 11.09.2013
(73) Titulaire: Safran Aircraft Engines, 75015 Paris (FR)
(72) Inventeur: ENGRAND, Eric, Dany, Robert, Jean, F-91360 Villemoisson Sur Orge (FR)
(74) Mandataire: Gevers & Orès
(86) Numéro de dépôt international: PCT/FR2011/052530
(87) Numéro de publication internationale: WO 2012/059670

(56) Documents cités:
- EP-A1- 0 818 264
- EP-A1- 0 849 021
- EP-A1- 1 795 286
- WO-A1-02/064323
- WO-A1-2006/119548
- DE-C- 473 181
- FR-A1- 2 620 242
- FR-A1- 2 702 981
- US-B2- 7 134 173
- US-B2- 7 565 796
- US-B2- 7 707 705

## Description

Le domaine de l'invention est celui d'un procédé d'usinage d'un carter d'aéronef selon le préambule de la revendication 1. Un tel procédé est connu de US 7,565,796 B. Le domaine de l'invention est également celui d'un outil de grattoir pour ébavurer un bord d'un carter d'un turbomoteur d'aéronef selon le préambule de la revendication 6. Un tel outil de grattoir est connu de EP 0 849 021 A.

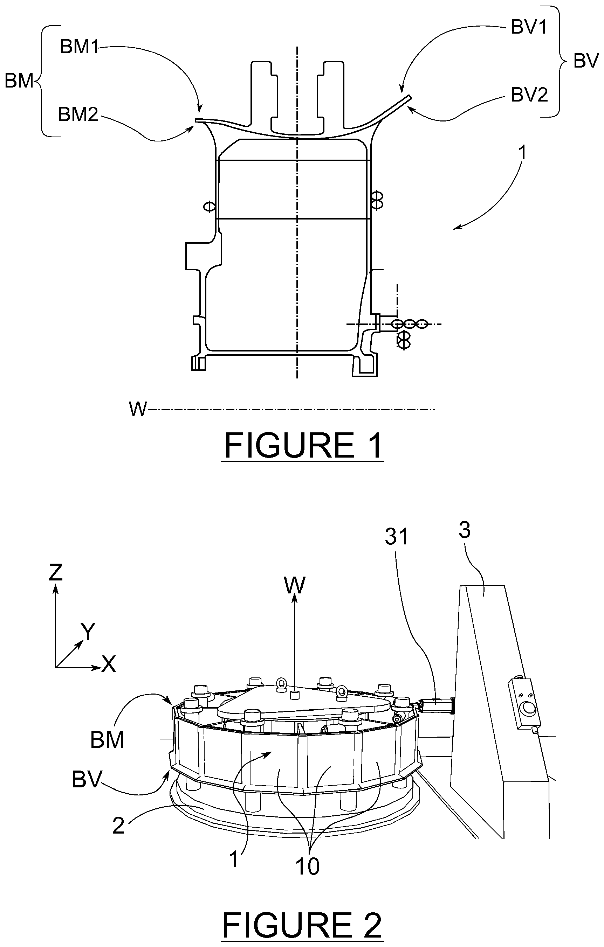

Un carter d'échappement d'un turbomoteur pour aéronef est une pièce métallique cylindrique de section sensiblement circulaire. Le carter d'échappement est agencé pour s'étendre selon l'axe du moteur, extérieurement au flux d'air circulant d'amont en aval dans le moteur. Par la suite, les termes « amont », « aval » sont définis par rapport au sens de circulation du flux d'air à l'intérieur du moteur. Ainsi, comme représenté partiellement sur la vue en coupe de la figure 1, la virole externe du carter d'échappement possède un corps cylindrique s'étendant axialement selon l'axe W et comportant un bord amont BM et un bord aval BV.
De même, par convention dans la présente demande, les termes « intérieur » et « extérieur » sont définis radialement par rapport à l'axe W du carter représenté sur la figure 1. Ainsi, un cylindre s'étendant selon l'axe du moteur comporte une surface intérieure tournée vers l'axe du moteur et une surface extérieure, opposée à sa surface intérieure. Ainsi, le bord amont BM comporte une partie extérieure BM1 et une partie intérieure BM2. De manière similaire, le bord aval BV comporte une partie extérieure BV1 et une partie intérieure BV2.
De manière classique, le carter d'échappement est obtenu par soudage de secteurs angulaires de carter. Après assemblage des secteurs, le carter d'échappement obtenu ne possède pas une section circulaire régulière, le rayon de courbure des bords du carter n'étant pas constant. Le carter d'échappement doit être remis en forme manuellement en appliquant des efforts mécaniques sur la surface extérieure du carter de manière à lui donner une forme sensiblement circulaire.
Pour permettre le montage de brides circulaires sur les bords avant et amont du carter, il est nécessaire que le carter possède une longueur axiale constante. De manière connue, on corrige la longueur axiale du carter au moyen d'un dispositif de fraisage. En pratique, le carter d'échappement est placé en position couchée, comme représenté sur la figure 2, de manière à ce qu'un des bords amont ou aval du carter s'étendent horizontalement selon la direction X.
Au cours de l'opération de fraisage, le bord amont et/ou aval est usiné de manière à corriger la longueur axiale du carter, c'est-à-dire, sa dimension verticale selon la direction Z lorsque le carter d'échappement est en position couchée. Cette opération est également désignée « mise à hauteur » du carter d'échappement par l'homme du métier.

L'usinage des bords du carter entraîne un dépôt de matière usinée au voisinage des bords amont et aval, aussi bien sur la surface intérieure qu'extérieure, ce dépôt de matière étant connu de l'homme du métier sous la désignation bavure. Les bavures forment des arêtes vives qui peuvent blesser un opérateur manipulant le carter d'échappement et doivent donc être éliminées par un procédé d'ébavurage.
Ce procédé d'ébavurage est actuellement mis en oeuvre de manière manuelle par des opérateurs utilisant divers outils, tels qu'une ponceuse pneumatique manuelle équipée d'une bande abrasive connue par exemple sous la dénomination commerciale « rayonmatic », un grattoir manuel ou une meuleuse pneumatique munie d'une fraise. D'un point de vue de la sécurité, l'utilisation de ces outils entraînent, d'une part, la projection de poussières nocives et, d'autre part, un risque de blessure pour les opérateurs. L'opérateur est alors obligé de porter un masque, des gants et des lunettes de protection ce qui allonge les durées de manipulation. L'étape d'ébavurage est une étape longue (de l'ordre de 15 minutes) dont le résultat final est variable en fonction de la compétence des opérateurs ce qui présente un inconvénient.
On connaît par ailleurs le brevet FR 2 620 242 de la société SNECMA relatif à un procédé d'utilisation d'un robot d'ébavurage. Un tel procédé n'est pas adapté car il requiert un robot d'ébavurage spécialisé ce qui augmente le coût de l'ébavurage. En outre, il existe un risque de blessure de l'opérateur au cours de l'installation du carter d'échappement dans le robot d'ébavurage.
Afin d'éliminer au moins certains de ces inconvénients, l'invention concerne un procédé d'usinage d'un carter d'un turbomoteur d'aéronef selon la revendication 1, le carter s'étendant selon un axe de carter et comportant un bord amont et un bord aval, le procédé comportant les étapes suivantes :
- une étape de positionnement du carter dans un châssis ;
- une étape de mise en rotation, selon l'axe du carter, du châssis à une vitesse de rotation de fraisage ;
- une étape de fraisage du bord aval et/ou du bord amont du carter au moyen d'un dispositif de fraisage de manière à corriger la longueur axiale du carter, le dispositif de fraisage comportant un outil de fraisage usinant ledit bord de carter au cours de la rotation du carter à la vitesse de rotation de fraisage ;
- une étape d'ébavurage dudit bord de carter de manière à retirer au moins une bavure formée au voisinage dudit bord suite à l'étape de fraisage, procédé dans lequel, le dispositif de fraisage comportant un outil de grattoir au cours de l'étape d'ébavurage, l'outil de grattoir usine la bavure par tournage au cours de la rotation du carter à la vitesse de rotation de fraisage.
Grâce au procédé selon l'invention, on réalise l'étape d'ébavurage directement à la suite de l'étape de fraisage au moyen d'un même dispositif de fraisage ce qui limite la durée du procédé d'usinage.

En outre, la vitesse de rotation de fraisage du carter est avantageusement utilisée pour le tournage sans modification du châssis. Etant donné que les étapes d'ébavurage et de fraisage sont consécutives, il n'est pas nécessaire de manipuler le carter ce qui limite le risque de blessure. Comme l'ébavurage est automatisé, le risque de blessure est très faible et le résultat final ne dépend plus de la compétence de l'opérateur.
De préférence, le carter comportant une partie intérieure tournée vers l'axe du carter et une partie extérieure opposée à ladite partie intérieure, la partie intérieure et la partie extérieure dudit bord de carter sont usinées successivement au cours de l'étape d'ébavurage en maintenant le carter positionné dans le châssis.
Une fois les parties intérieure et extérieure d'un bord ébavurées, on peut monter sur ledit bord une bride de fixation sans risque de blessure. En outre, aucune manipulation du carter n'est nécessaire pour atteindre les bavures intérieure et extérieure, l'outil de grattoir étant adapté pour atteindre aussi bien la bavure intérieure que la bavure extérieure.
De préférence encore, au cours de l'étape d'ébavurage, on usine les bords amont et aval du carter en maintenant le carter positionné dans le châssis. Aucune manipulation du carter n'est nécessaire pour atteindre les bavures des bords amont et aval ce qui limite le risque de blessure, le dispositif de fraisage déplaçant l'outil de grattoir pour atteindre les différents bords.

L'invention concerne également un outil de grattoir selon la revendication 6 pour ébavurer un bord d'un carter d'un turbomoteur d'aéronef, l'outil de grattoir étant destiné à être monté dans un dispositif de fraisage, l'outil comportant un corps comprenant, à une première extrémité, des moyens de liaison au dispositif de fraisage et, à une deuxième extrémité, un module d'ébavurage comprenant une plaquette de tour comportant au moins une arête coupante agencée pour ébavurer le bord du carter.
L'outil de grattoir permet avantageusement de se substituer à un outil de fraisage conventionnel du dispositif de fraisage pour réaliser un ébavurage, la plaquette de tour étant adaptée pour réaliser l'opération de tournage.

Selon l'invention, le module d'ébavurage comporte des moyens de guidage destinés à entrer en contact avec le bord à ébavurer de manière à suivre le profil du bord à ébavurer sans modifier l'orientation de la plaquette de tour. Les moyens de guidage suivent le profil du bord de carter de manière à positionner la plaquette de tour à hauteur de la bavure du bord. L'orientation de la plaquette de tour n'est pas modifiée pour permettre un ébavurage précis de la bavure.

Selon l'invention, le module d'ébavurage comporte un poteau de liaison, sur lequel est monté la plaquette de tour, et un plateau monté rotatif autour dudit poteau de liaison, les moyens de guidage étant ménagés sur ledit plateau. Ainsi, lorsque les moyens de guidage entrent en contact avec le bord à ébavurer, le plateau est entraîné en rotation autour du poteau de liaison sans modifier l'orientation de la plaquette de tour. Autrement dit, les moyens de guidage modifient la hauteur de coupe de la bavure sans modifier l'angle de coupe.

Selon l'invention, les moyens de guidage comportent au moins deux rouleaux parallèles destinés à entrer simultanément en contact avec le bord à ébavurer. L'utilisation de deux rouleaux permet, d'une part, d'obtenir un appui stable sur le bord sans modifier l'orientation de la plaquette de tour et, d'autre part, d'autoriser la rotation du carter au cours de l'ébavurage. En effet, un rouleau comporte par nature un noyau interne et une enveloppe externe montée rotative sur ledit noyau interne. Au cours de la rotation du carter, seule l'enveloppe externe du rouleau est entraînée en rotation ce qui empêche l'entraînement du noyau interne ainsi que celui du plateau du module d'ébavurage qui est solidaire dudit noyau interne.
De préférence, le poteau de liaison s'étend entre les rouleaux. La hauteur de coupe est parfaitement définie entre les deux rouleaux, la plaquette de tour peut ainsi usiner de manière précise la bavure du bord. De manière préférée, le poteau de liaison est monté à égale distance des rouleaux ce qui améliore encore plus la précision de l'ébavurage.
Selon un autre aspect de l'invention, une extrémité du poteau de liaison est montée dans le corps de l'outil, des moyens élastiques étant ménagés entre ladite extrémité du poteau de liaison et ledit corps de manière à calibrer l'effort de coupe de la plaquette de tour sur le bord à ébavurer.
Les moyens élastiques permettent de calibrer l'effort de la plaquette de tour et donc la pénétration de la plaquette de tour dans le bord du carter de manière à retirer la bavure de manière optimale, sans usiner de manière excessive ou de manière insuffisante. Cela permet en outre d'ébavurer un bord dont le rayon de courbure varie et n'est pas régulier. Cela est très avantageux pour un carter formé à partir de secteurs.
Selon un premier aspect, les moyens élastiques comportent au moins une tige amortisseur montée dans le corps de l'outil. De manière préférée, la tige amortisseur comporte des moyens de réglage de l'amortissement de la tige amortisseur afin de calibrer l'effort de coupe.
Selon un deuxième aspect, les moyens élastiques comportent au moins un ressort monté autour du poteau de liaison.
Selon un aspect préféré de l'invention, le carter comportant une partie intérieure et une partie extérieure, la plaquette de tour comporte au moins deux arêtes coupantes parallèles qui sont agencées pour ébavurer respectivement une partie intérieure et une partie extérieure du bord du carter. La forme de la plaquette de tour est adaptée pour usiner les deux parties ce qui permet un usinage successif desdites parties au cours de l'ébavurage et donc procure un gain de temps.

L'invention sera mieux comprise à l'aide de la description suivante de l'invention en référence au dessin annexé sur lequel :
- la figure 1 est une vue en coupe partielle d'une virole externe d'un carter d'échappement d'un turbomoteur d'aéronef s'étendant selon un axe W (déjà commentée) ;
- la figure 2 est une vue en perspective d'un carter d'échappement et d'un dispositif de fraisage selon l'art antérieur au cours d'une opération d'usinage de la longueur axiale du carter d'échappement (déjà commentée) ;
- la figure 3 est une vue en perspective d'un outil de grattoir selon une première forme de réalisation de l'invention pour ébavurer un bord du carter d'échappement ;
- la figure 4 est une vue de l'extrémité de l'outil de grattoir de la figure 3 ;
- la figure 5 est une vue schématique de l'outil de grattoir de la figure 3, un plan de coupe V-V étant représenté ;
- la figure 6 est une vue en coupe schématique selon le plan de coupe V-V de l'outil de grattoir de la figure 5 ;
- la figure 7 est une vue en perspective de l'ébavurage du bord amont extérieur du carter d'échappement ;
- la figure 8 est une vue en perspective de l'ébavurage du bord amont intérieur du carter d'échappement ;
- la figure 9 est une vue en perspective de l'ébavurage du bord aval extérieur du carter d'échappement ; et
- la figure 10 est une vue en perspective de l'ébavurage du bord aval intérieur du carter d'échappement ; et
- la figure 11 est une vue en coupe schématique d'un outil de grattoir selon une deuxième forme de réalisation.

L'invention va être présentée à titre d'exemple pour un carter d'échappement d'un turbomoteur pour aéronef mais il va de soi que l'invention s'applique à tout carter de turbomoteur, de préférence, à un carter circonférentiel formé par solidarisation de plusieurs secteurs de carter.

Comme représenté sur les figures 1 et 2, un carter d'échappement 1 d'un turbomoteur pour aéronef est une pièce métallique de forme cylindrique s'étendant axialement selon un axe W et comportant un bord amont BM et un bord aval BV. Dans cet exemple, le carter d'échappement 1 est circonférentiel et est formé par solidarisation de plusieurs secteurs de carter 10. Il en résulte, d'une part, que la dimension axiale du carter d'échappement 1, c'est-à-dire la dimension selon l'axe W, n'est pas constante à la circonférence du carter et, d'autre part, que le profil des bords du carter d'échappement 1 ne sont pas réguliers.

Pour corriger la dimension axiale du carter 1, on réalise un usinage d'un des bords amont et/ou aval de manière à ce que la distance du bord amont au bord aval soit sensiblement constante à la circonférence du carter 1. Selon l'invention, en référence à la figure 2, on corrige la longueur axiale du carter 1 au moyen d'un dispositif de fraisage 3 comportant un outil de fraisage 31 destiné à entrer en contact avec les bords amont BM et/ou aval BV du carter d'échappement 1. Par la suite, le carter d'échappement 1 et le dispositif de fraisage 3 sont représentés sur la figure 2 dans un repère orthogonal (X, Y, Z).

Au cours du fraisage, le carter d'échappement 1 est placé dans un en position couchée dans un châssis 2, appelé aussi centre d'usinage, de manière à ce que son axe W s'étende verticalement selon la direction verticale Z. Le châssis 2 est ici agencé pour tourner autour de l'axe vertical Z de manière à entraîner le carter d'échappement 1 en rotation autour de son axe W afin de présenter toute la circonférence des bords BM, BV du carter d'échappement 1 devant l'outil de fraisage 31 du dispositif de fraisage 1. La vitesse de rotation du carter d'échappement 1 est faible de l'ordre de 1 cm/s de manière à renouveler la portion du bord à ébavurer par l'outil de fraisage sans pour autant engendrer d'efforts horizontaux. Cette vitesse est connue de l'homme du métier sous la désignation « vitesse de rotation de fraisage ». L'outil de fraisage 31 comporte ici une fraise entraînée à une vitesse élevée de l'ordre de 30 m/min, un tel outil de fraisage est connu de l'homme du métier.

Dans cet exemple, le bord amont BM et le bord aval BV sont tous les deux usinés ce qui entraîne un dépôt de matière usinée à proximité des bords amont BM et aval BV, aussi bien sur la surface intérieure qu'extérieure du carter d'échappement 1, ce dépôt de matière étant connu de l'homme du métier sous la désignation « bavure ». Pour éliminer ces bavures, il est nécessaire d'usiner les parties extérieure BM1 et intérieure BM2 du bord amont BM ainsi que les parties extérieure BV1 et intérieure BV2 du bord aval BV. Par souci de simplicité, on désignera par la suite « les bavures », la bavure amont intérieure BM2, la bavure amont extérieure BM1, la bavure aval intérieure BV2 et la bavure aval extérieure BV1.

Selon l'invention, les bavures sont éliminées au moyen d'un outil de grattoir 4 monté sur le dispositif de fraisage 3 qui vient usiner par tournage (et non par fraisage) les bavures.

Au cours d'une opération de fraisage, l'enlèvement de matière résulte de la combinaison de deux mouvements : la rotation de l'outil de coupe d'une part, et l'avance de la pièce à usiner d'autre part. Au contraire, au cours d'une opération de tournage, le mouvement de coupe consiste en un unique mouvement : soit la pièce à usiner est immobile et l'outil de coupe est mobile, soit la pièce à usiner est mobile et l'outil de coupe est immobile.

### - Outil de grattoir 4

L'outil de grattoir 4 va être tout d'abord présenté. Son utilisation dans le procédé d'usinage selon l'invention sera détaillée par la suite.

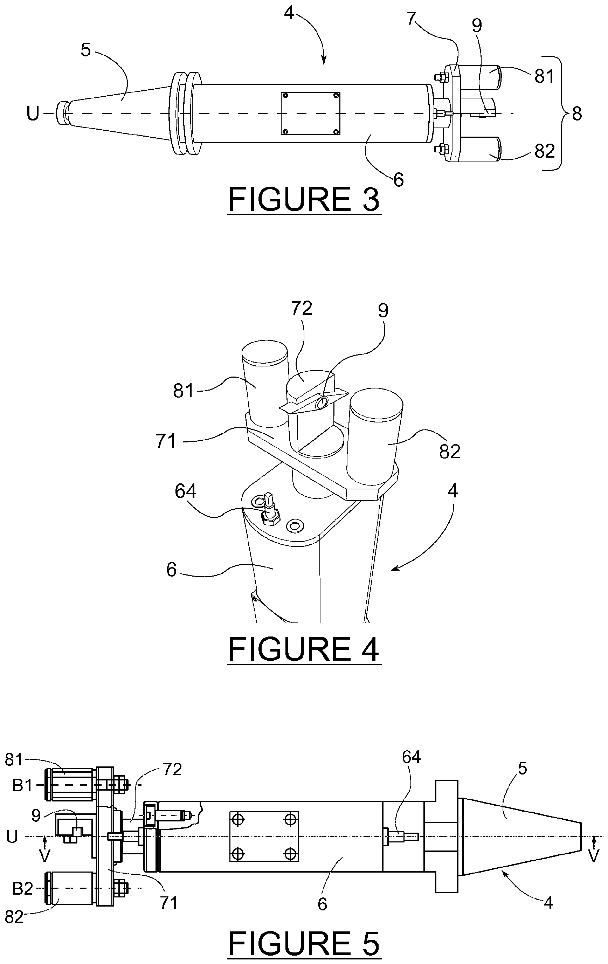

En référence à la figure 3, l'outil de grattoir 4 comporte un corps 6, s'étendant longitudinalement selon la direction U, qui comprend, à une première extrémité, des moyens 5 de liaison à un dispositif de fraisage 3 et, à une deuxième extrémité, un module d'ébavurage 7 agencé pour usiner les bavures.

### - Moyens de liaison 5

Les moyens de liaison 5 se présentent dans cet exemple sous la forme d'une liaison conique (connue de l'homme du métier sous la désignation « cône S40 ») adaptée pour être connectée au dispositif de fraisage 3 à la manière d'un outil de fraisage conventionnel. Autrement dit, l'outil de grattoir 4 selon l'invention est adapté pour se connecter au dispositif de fraisage 3 en lieu et place de l'outil de fraisage 31. Ces moyens de liaison 5 sont traditionnellement adaptés pour permettre la transmission d'une consigne de vitesse de fraisage depuis le dispositif de fraisage 3 vers l'outil de fraisage afin que la fraise de l'outil de fraisage soit entraînée à ladite vitesse de fraisage. A titre d'exemple, si la consigne de vitesse de fraisage est de 5000 tours/minute pour le dispositif de fraisage 3, cette consigne est transmise par la liaison conique de l'outil de fraisage pour que sa fraise tourne à 5000 tours/minute.

Selon l'invention, les moyens de liaison 5 sont agencés pour imposer une vitesse de fraisage nulle étant donné que l'outil de grattoir 4 n'est pas un outil de fraisage mais un outil de tournage qui, par nature, réalise un usinage en demeurant fixe. Ainsi, à la différence de moyens de liaison traditionnels, les moyens de liaison 5 selon l'invention inhibent les consignes de fraisage du dispositif de fraisage 3.

### - Module d'ébavurage 7

Dans cet exemple, en référence aux figures 3 à 6, le module d'ébavurage 7 comporte un poteau de liaison 72 s'étendant selon la direction U sur lequel est monté rotatif un plateau plan 71, ici de forme polygonale, s'étendant perpendiculairement à la direction U.

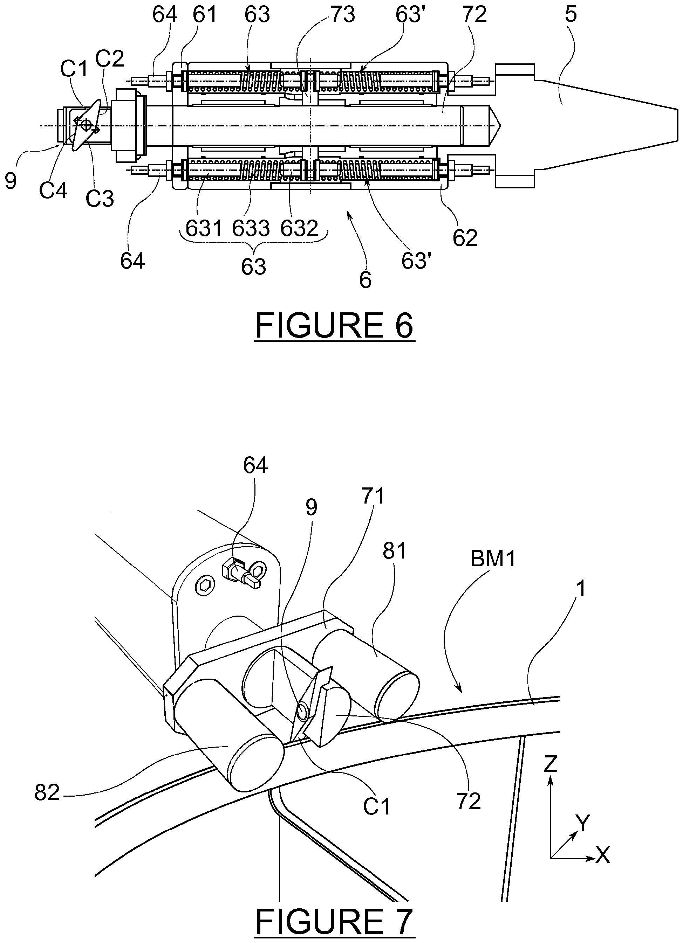

Une plaquette de tour 9 est montée à une première extrémité du poteau de liaison 72. La plaquette 9 comporte quatre arêtes coupantes C1-C4 agencées pour ébavurer la bavure amont intérieure BM2, la bavure amont extérieure BM1, la bavure aval intérieure BV2 et la bavure aval extérieure BV1. Comme représenté schématiquement sur la figure 6, la plaquette de tour 9 possède une forme de losange. Les arêtes C1 et C3, de même que les arêtes C2 et C4, sont parallèles entre elles. En positon montée, les arêtes coupantes C1-C4 sont partiellement saillantes depuis le poteau de liaison 72 comme représenté sur la figure 4. La plaquette de tour 9 est ici en aluminium mais il va de soi que d'autres matériaux pourraient également convenir.

Comme représenté sur les figures 5 et 6, une deuxième extrémité du poteau de liaison 72 s'étend dans le corps longitudinal 6 de l'outil de grattoir 4. Le corps longitudinal 6 comporte des moyens de limitation de la course du poteau de liaison 72 selon la direction U se présentant, dans cet exemple, sous la forme d'une butée avant 61 et d'une butée arrière 62 solidaires du corps 6.

En outre, pour appliquer un effort calibré sur le bord à ébavurer, des moyens élastiques sont disposés autour de la deuxième extrémité du poteau de liaison 72 comme représenté sur la figure 6. Les moyens élastiques sont positionnés d'une part et d'autre d'un anneau d'arrêt 73 solidaire de la deuxième extrémité du poteau de liaison 72.

Selon une première forme de réalisation de l'invention, quatre tiges amortisseur 63, 63' sont montées dans le corps de 6, deux premières tiges amortisseur 63 étant montées d'une part de l'anneau d'arrêt 73, deux deuxièmes tiges amortisseur 63' étant montées d'une autre part dudit anneau d'arrêt 73 comme représenté sur la figure 6. Chaque première tige amortisseur 63 est ici placée de manière à être alignée longitudinalement avec une deuxième tige amortisseur 63' afin d'appliquer des efforts répartis sur l'anneau d'arrêt 73.

Une tige amortisseur 63, 63' s'étend longitudinalement et comporte un premier élément rectiligne 631 et un deuxième élément rectiligne 632 qui sont reliés par un ressort 633. Dans cet exemple, le ressort 633 est monté extérieurement aux éléments rectilignes 632, 633 afin de permettre son guidage longitudinal. Comme représenté sur la figure 6, le deuxième élément rectiligne 632 est monté en appui sur une face de l'anneau d'arrêt 73 tandis que la première extrémité 631 est solidaire d'une des butées 61, 62. De manière préférée, chaque tige amortisseur 63 comporte des moyens de réglage 64 agencés pour paramétrer la contrainte du ressort 633 de la tige amortisseur 63. Comme représenté sur les figures 4 à 6, ces moyens de réglage 64 sont formés par une extrémité du premier élément 631 de la tige amortisseur 63 qui est saillante du corps 6 de l'outil. De manière très avantageuse, par vissage ou dévissage de l'extrémité saillante, on règle la longueur axiale du premier élément 631 de la tige amortisseur 63 dans le corps 6 et on paramètre ainsi la longueur de compression du ressort 633 de la tige amortisseur 63 ce qui modifie la contrainte appliquée. Ainsi, pour les quatre tiges amortisseur 63, 63', on dispose de quatre moyens de réglage 64 facilement accessibles et manipulables afin de paramétrer de manière précise la force des ressorts 633 sur le poteau de liaison 72 et donc la force de coupe de l'outil 4.

A titre d'exemple, lorsque la plaquette de tour 9 est en appui sur un bord intérieur du carter d'échappement 1, les moyens élastiques permettent de calibrer la force d'appui pour l'ébavurage. Pour appuyer la plaquette de tour 9 sur le bord intérieur, on exerce un effort sur l'outil de grattoir 4 vers l'extérieur du carter d'échappement 1. Autrement dit, le corps 6 est entraîné vers l'extérieur tandis que le poteau de liaison 72 (solidaire de la plaquette de tour 9) est immobile du fait du contact avec le bord du carter 1. Il en résulte un déplacement relatif du poteau de liaison 72 par rapport au corps 6 ce qui augmente la longueur de la partie du poteau de liaison 72 en saillie hors du corps 6. Dans cet exemple, les premières tige amortisseur 63 limitent le déplacement du poteau de liaison 72 en appliquant une force opposée sur l'anneau d'arrêt 73 de manière à limiter la longueur de la partie du poteau de liaison 72 en saillie hors du corps 6.

En d'autres termes, les premières tiges amortisseur 63 remplissent une fonction d'amortisseur pour venir équilibrer l'effort appliqué au poteau de liaison 72 et donc l'effort appliqué par la plaquette de tour 9 sur le bord intérieur. L'arête coupante de la plaquette de tour 9 qui entre en contact avec le bord peut ainsi retirer la bavure de manière optimale, c'est-à-dire, sans usiner de manière excessive ou insuffisante ledit bord. Un usinage excessif présente l'inconvénient de dépasser la plage de tolérance de l'usinage ce qui nécessite une retouche par soudure, un usinage insuffisant présentant l'inconvénient de laisser une bavure amoindrie mais pouvant toujours occasionner des blessures pour les opérateurs. Dans l'ensemble des tiges amortisseur 63, 63', deux tiges amortisseurs sont utilisées pour l'usinage en poussant et deux autres sont utilisées pour l'usinage en tirant. Les ressorts des tiges amortisseur sont choisis en rapport avec la dureté de la matière à usiner.

Par ailleurs, cela permet d'ébavurer un bord dont le rayon de courbure varie et n'est pas régulier. Cela est très avantageux pour un carter formé à partir de secteurs. Dans cet exemple, les tiges amortisseur 63, 63' et les butées 61, 62 autorisent une course du poteau de liaison 72 de l'ordre de 10 mm afin de pallier aux variations de circularité de l'ordre de 1,5 mm pour un carter d'échappement moyen.

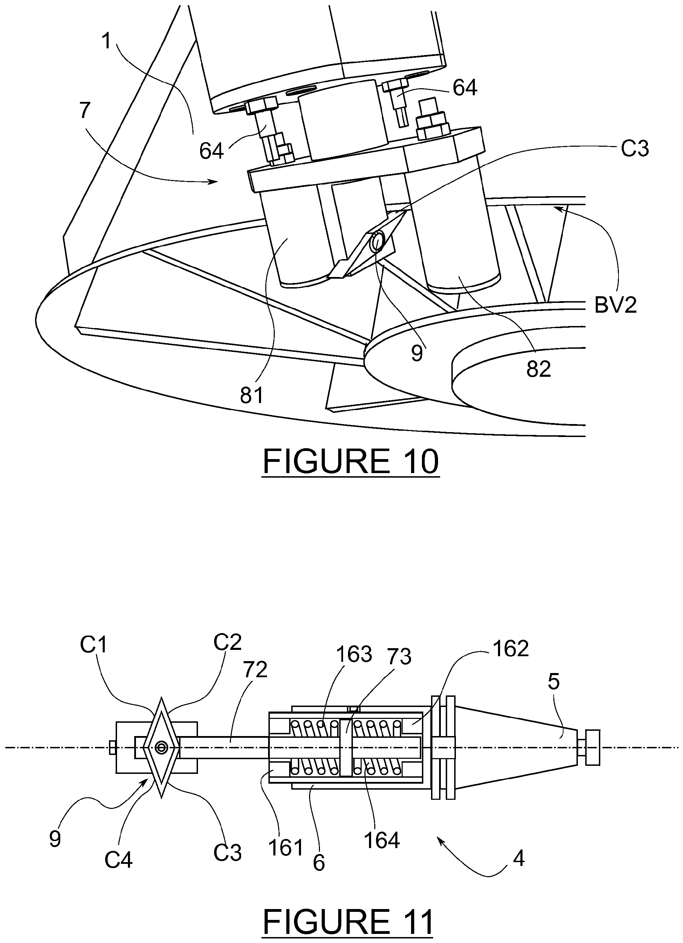

Selon une autre forme de réalisation des moyens de limitation de la course du poteau de liaison 72 selon la direction U, en référence à la figure 11, les moyens élastiques se présentent sous la forme d'un premier ressort 163 et d'un deuxième ressort 164 montés d'une part et d'autre de l'anneau d'arrêt 73 solidaire de la deuxième extrémité du poteau de liaison 72. En référence à la figure 11, le premier ressort 163 est monté autour du poteau de liaison 72 dans le corps 6 entre une butée avant 161 et l'anneau d'arrêt 73, un deuxième ressort 164 étant monté autour du poteau de liaison 72 dans le corps 6 entre l'anneau d'arrêt 73 et une butée arrière 162. De tels moyens sont simples à mettre en oeuvre et à fabriquer. Pour calibrer la force de coupe, on peut avantageusement régler la position des butées 161, 162 et ainsi modifier la contrainte des ressorts 163, 164.

### - Moyens de guidage 8

Afin de positionner la plaquette de tour 9 à hauteur de la bavure, le module d'ébavurage 7 comporte en outre des moyens de guidage 8 agencés pour suivre le profil de la partie du bord à ébavurer en guidant le module d'ébavurage 7.

En référence aux figures 3 à 6, les moyens de guidage 8 se présentent dans cet exemple sous la forme de deux rouleaux rotatifs 81, 82 de forme cylindrique, qui s'étendent depuis le plateau 71 et dont les axes d'orientation B1, B2 s'étendent perpendiculairement au plan défini par ledit plateau 71. Autrement dit, les axes B1, B2 des rouleaux rotatifs 81, 82 sont parallèles entre eux et s'étendent selon l'axe U. Chaque rouleau 81, 82 comporte ici un noyau interne solidaire du plateau 71 et une enveloppe externe montée rotative sur ledit noyau interne.

Comme représenté sur la figure 4, le poteau de liaison 72 s'étend entre les deux rouleaux 81, 82, dans cet exemple, à égale distance desdits rouleaux 81, 82. Lorsque les rouleaux 81, 82 sont en appui sur la partie transversale du bord du carter d'échappement 1, c'est-à-dire en appui vertical selon la direction Z, la hauteur d'ébavurage est définie de manière précise pour positionner la plaquette de tour 9 solidaire du poteau de liaison 72. La plaquette de tour 9 est à la bonne hauteur de coupe pour usiner la bavure située entre les deux rouleaux 81, 82, c'est-à-dire, la portion du bord qui est en cours d'ébavurage.

Au fur et à mesure de la rotation du carter d'échappement 1 autour de son axe W, le profil de la portion du bord curviligne situé entre les deux rouleaux 81, 82 évolue. Seule l'enveloppe externe des rouleaux 81, 82 est entraînée en rotation ce qui empêche l'entraînement du noyau interne des rouleaux 81, 82 ainsi que celui du plateau 71 du module d'ébavurage 7. Il en résulte un déplacement du plateau 71 qui entraîne un déplacement vertical du poteau de liaison 72 sans modifier l'orientation de la plaquette de tour 9.

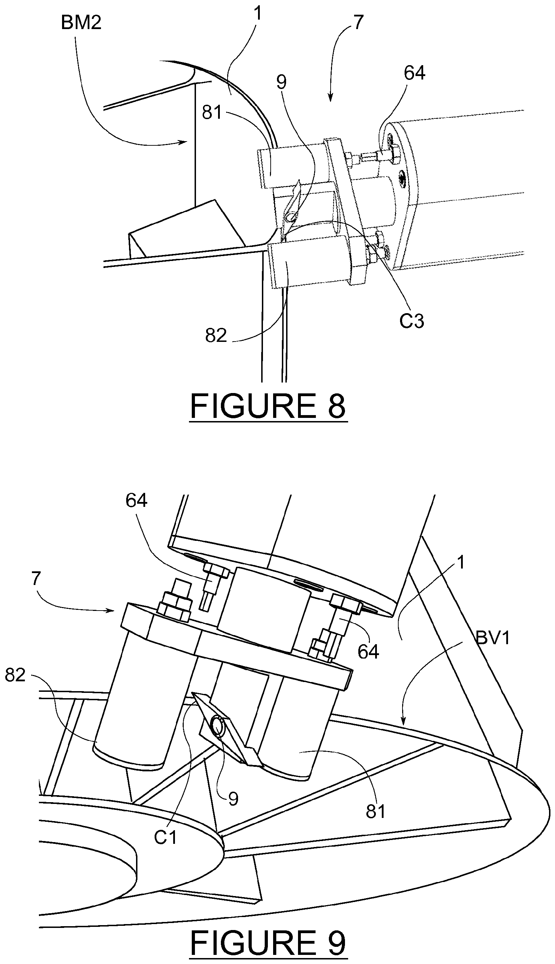

L'invention va être maintenant présentée, en référence aux figures 7 à 10, au cours des opérations d'ébavurage de la bavure amont extérieure BM1 (Figure 7), la bavure amont intérieure BM2 (Figure 8), la bavure aval extérieure BV1 (Figure 9) et la bavure aval intérieure BV2 (Figure 10).

### - Mise en oeuvre de l'usinage

Selon l'invention, après mise à hauteur du carter d'échappement 1, alors que ce dernier est encore en position couchée dans le châssis 2, on procède à l'opération d'ébavurage en remplaçant l'outil de fraisage 31 du dispositif de fraisage 3 par l'outil de grattoir 4 présenté précédemment.

L'outil de grattoir 4, qui n'est pas un outil de fraisage, ne comprend pas de partie rotative pour l'usinage mais uniquement une plaquette de tour 9. De manière très avantageuse, la rotation du châssis 2 n'est pas modifiée entre l'opération de fraisage et celle d'ébavurage, ce qui permet avantageusement d'usiner le carter d'échappement 1 par tournage, la carter 1 étant entraîné en rotation autour de l'axe W à la vitesse de rotation de fraisage alors que l'outil de grattoir 4 demeure fixe.

A titre d'exemple, en référence à la figure 7, le dispositif de fraisage 3 positionne l'outil de grattoir 4 sur le bord amont BM afin d'usiner la bavure extérieure BM1 du carter d'échappement 1. A cet effet, l'arête coupante C1 de l'outil de grattoir 4 est placée, au moins partiellement, à l'extérieur du carter d'échappement 1 et est appuyée sur la partie extérieure du bord amont BM1, les ressorts 63, 64 calibrant la force d'appui de l'arête coupante C1. En référence à la figure 7, la plaquette de tour 9 s'étend obliquement par rapport à la direction verticale Z et est dirigée vers l'intérieur du carter d'échappement 1 du bas vers le haut.

Les rouleaux 81, 82 sont en appui vertical selon l'axe Z sur le bord amont BM de manière à suivre le profil dudit bord BM1 au cours de la rotation du carter d'échappement 1. Lorsque le profil évolue, la hauteur des rouleaux 81, 82 selon la direction Z est modifiée ce qui modifie la hauteur de coupe de l'arête coupante C1.

La bavure extérieure amont est littéralement raclée ou grattée par l'arête coupante C1 au fur et à mesure de la rotation du carter d'échappement 1 ce qui correspond à un usinage par tournage. Le bord amont extérieur BM1 est lisse après ébavurage facilitant la manipulation du carter d'échappement 1.

Pour ébavurer le bord amont intérieur BM2 comme représenté sur la figure 8, on fait tourner le module d'ébavurage 7 d'un demi-tour autour de l'axe U de manière à ce que l'arête coupante C3 soit en contact avec le bord amont intérieur BM2.En référence à la figure 8, la plaquette de tour 9 s'étend obliquement par rapport à la direction verticale Z et est dirigée vers l'extérieur du carter d'échappement 1 du bas vers le haut.

De manière similaire à l'ébavurage du bord amont extérieur BM1, l'ébavurage par l'arête coupante C3 permet de rendre lisse le bord amont intérieur BM2 ce qui facilite la manipulation du carter d'échappement 1. En outre, comme les bavures intérieure et extérieure d'un même bord ont été retirées, on peut aisément monter une bride sur ledit bord.

En ce qui concerne le bord aval BV, le dispositif de fraisage 3 permet d'incliner l'outil de grattoir 4 vers le bas de manière à atteindre les parties intérieure et extérieure du bord aval BV comme représenté sur les figures 9 et 10, les arêtes coupantes C1, C3 usinant respectivement le bord aval extérieur BV1 et le bord aval intérieur BV2.

Une fois les quatre bavures retirées, on retire le carter d'échappement 1 du châssis 2 pour monter, par exemple, des brides sur lesdits bords.

Grâce au procédé d'usinage selon l'invention, on peut réaliser les opérations de mise à hauteur et d'ébavurage au moyen d'un même dispositif de fraisage en changeant uniquement l'outil d'usinage. En outre, ces opérations ne nécessitent pas de retirer le carter d'échappement 1 du châssis 2 ce qui permet d'enchaîner lesdites opérations et donc de raccourcir la durée globale du procédé d'usinage du carter d'échappement 1. De plus, le risque de blessure d'un opérateur est éliminé du fait que toutes les opérations sont réalisées par le dispositif de fraisage sans manipulation du carter d'échappement 1 par un opérateur.

## Revendications

1. Procédé d'usinage d'un carter (1) d'un turbomoteur d'aéronef, le carter (1) s'étendant selon un axe de carter (W) et comportant un bord amont (BM) et un bord aval (BV) par rapport au sens de circulation du flux d'air à l'intérieur du turbomoteur, le procédé étant **caractérisé par le fait qu'**il comporte les étapes suivantes :
- positionnement du carter (1) dans un châssis (2) ;
- mise en rotation, autour de l'axe du carter (W), du châssis (2) à une vitesse de rotation de fraisage ;
- fraisage du bord aval (BV) et/ou du bord amont (BM) du carter (1) au moyen d'un outil de fraisage (31) d'un dispositif de fraisage (3) de manière à corriger une longueur axiale du carter (1) suivant l'axe du carter (W), usinage d'un bord du carter (1) au moyen de l'outil de fraisage (31) au cours de la rotation du carter (1) à la vitesse de rotation de fraisage ; et
- ébavurage dudit bord du carter (1) de manière à retirer au moins une bavure formée sur ledit bord suite à l'étape de fraisage ;
- l'étape d'ébavurage comprenant l'utilisation d'un outil de grattoir (4) équipant le dispositif de fraisage (3) au cours de l'étape d'ébavurage et l'usinage de la bavure par tournage avec l'outil de grattoir (4) au cours de la rotation du carter (1) à la vitesse de rotation de fraisage.

2. Procédé selon la revendication 1, dans lequel, le carter (1) comportant une partie intérieure du bord tournée vers l'axe du carter (W) et une partie extérieure du bord opposée à ladite partie intérieure, la partie intérieure dudit bord et la partie extérieure dudit bord de carter sont usinées successivement au cours de l'étape d'ébavurage en maintenant le carter (1) positionné dans le châssis (2).

3. Procédé selon la revendication 2, dans lequel, au cours de l'étape d'ébavurage, on usine les bords amont (BM) et aval (BV) du carter (1) en maintenant le carter (1) positionné dans le châssis (2).

4. Procédé selon la revendication 1, dans lequel l'étape d'ébavurage est réalisée par le remplacement de l'outil de fraisage (31) par l'outil de grattoir (4).

5. Procédé selon la revendication 1 ou 4, dans lequel l'étape d'ébavurage est réalisée après l'étape de fraisage.

6. Outil de grattoir (4) pour ébavurer un bord d'un carter (1) d'un turbomoteur d'aéronef, l'outil de grattoir (4) étant destiné à équiper un dispositif de fraisage (3) et comportant un corps (6) comprenant, à une première extrémité, des moyens (5) de liaison au dispositif de fraisage (3) et, à une deuxième extrémité, un module d'ébavurage (7),
**caractérisé en ce que** le module d'ébavurage comprend :
- un poteau de liaison (72),
- un plateau (71) monté rotatif autour dudit poteau de liaison (72),
- une plaquette de tour (9) montée sur le poteau de liaison (72) et comportant au moins deux arêtes coupante (C1, C3) parallèles qui sont agencées pour ébavurer le bord du carter (1),
- des moyens de guidage (8) ménagés sur ledit plateau (71) et destinés à être en contact avec le bord à ébavurer de manière à suivre le profil du bord à ébavurer sans modifier l'orientation de la plaquette de tour (9), les moyens de guidage (8) comportant au moins deux rouleaux (81, 82) parallèles destinés à être simultanément en contact avec le bord à ébavurer.

7. Outil selon la revendication 6, dans lequel la plaquette de tour (9) est montée sur le poteau de liaison (72) de manière que chaque arête coupante (C1, C3) usine une bavure située entre les entre les deux rouleaux (81, 82) lorsque les deux rouleaux sont en contacts avec une portion du bord à ébavurer.

8. Outil selon la revendication 6 ou 7, dans lequel, les arêtes sont partiellement saillantes depuis le poteau de liaison (72).

9. Outil selon l'une des revendications 6 à 8, dans lequel le poteau de liaison (72) s'étend entre les rouleaux (81, 82), de préférence, à égale distance des rouleaux (81, 82).

10. Outil selon la revendication 4 à 6, **caractérisé en ce que** les rouleaux (81, 82) sont de forme cylindrique qui s'étendent depuis le plateau (74) suivant des axes d'orientation (B1, B2) parallèles et perpendiculaires chacun au plan défini par ledit plateau (71).

11. Outil selon l'une des revendication 4 à 9, dans lequel une extrémité du poteau de liaison (72) est montée dans le corps (6), des moyens élastiques (63, 64) étant ménagés entre ladite extrémité du poteau de liaison (72) et ledit corps (6) de manière à calibrer l'effort de coupe de la plaquette de tour (9) sur le bord à ébavurer.

12. Outil selon l'une des revendications 4 à 6, 9 et 11, dans lequel, la plaquette de tour (9) possède une forme de losange.

## Patentansprüche

1. Verfahren zur Bearbeitung eines Gehäuses (1) eines Flugzeugturbomotors, wobei das Gehäuse (1) sich gemäß einer Gehäuseachse (W) erstreckt und in Bezug auf die Umlaufrichtung des Luftstroms innerhalb des Turbomotors einen stromaufwärtigen Rand (BM) und einen stromabwärtigen Rand (BV) enthält, wobei das Verfahren durch die Tatsache gekennzeichnet ist, dass es die folgenden Schritte enthält:
- Positionieren des Gehäuses (1) in einem Fahrwerk (2);
- Versetzen des Fahrwerks (2) in Drehung um die Gehäuseachse (W) bei einer Fräsdrehzahl;
- Fräsen des stromabwärtigen Randes (BV) und/oder des stromaufwärtigen Randes (BM) des Gehäuses (1) mithilfe eines Fräswerkzeugs (31) einer Fräsvorrichtung (3), sodass eine axiale Länge des Gehäuses (1) entlang der Gehäuseachse (W) korrigiert wird, Bearbeitung eines Randes des Gehäuses (1) mithilfe des Fräswerkzeugs (31) während der Drehung des Gehäuses (1) bei der Fräsdrehzahl; und
- Entgraten des Randes des Gehäuses (1), sodass mindestens ein Grat, der infolge des Schritts des Fräsens auf dem Rand gebildet wurde, entfernt wird;
- wobei der Schritt des Entgratens den Gebrauch eines die Fräsvorrichtung (3) bestückenden Abstreifwerkzeugs (4) während des Schritts des Entgratens und die Bearbeitung des Grats durch Drehbearbeitung mit dem Abstreifwerkzeug (4) während der Drehung des Gehäuses (1) bei der Fräsdrehzahl umfasst.

2. Verfahren nach Anspruch 1, wobei das Gehäuse (1) einen inneren Teil des Randes, der der Gehäuseachse (W) zugewandt ist, und einen äußeren Teil des Randes, der dem inneren Teil gegenüberliegt, enthält, wobei der innere Teil des Randes und der äußere Teil des Randes des Gehäuses während des Schritts des Entgratens bei Beibehaltung der Positionierung des Gehäuses (1) im Fahrwerk (2) sukzessiv bearbeitet werden.

3. Verfahren nach Anspruch 2, wobei während des Schritts des Entgratens der stromaufwärtige Rand (BM) und stromabwärtige Rand (BV) des Gehäuses (1) bei Beibehaltung der Positionierung des Gehäuses (1) im Fahrwerk (2) bearbeitet werden.

4. Verfahren nach Anspruch 1, wobei der Schritt des Entgratens durch das Ersetzen des Fräswerkzeugs (31) durch das Abstreifwerkzeug (4) durchgeführt wird.

5. Verfahren nach Anspruch 1 oder 4, wobei der Schritt des Entgratens nach dem Schritt des Fräsens durchgeführt wird.

6. Abstreifwerkzeug (4), um einen Rand eines Gehäuses (1) eines Flugzeugturbomotors zu entgraten, wobei das Abstreifwerkzeug (4) dazu bestimmt ist, eine Fräsvorrichtung (3) zu bestücken und einen Körper (6) enthält, der an einem ersten Ende Verbindungsmittel (5) zur Fräsvorrichtung (3) und an einem zweiten Ende ein Entgratungsmodul (7) umfasst,
**dadurch gekennzeichnet, dass** das Entgratungsmodul umfasst:
- einen Verbindungspfosten (72),
- eine Grundplatte (71), die drehbar um den Verbindungspfosten (72) montiert ist,
- eine Drehplatte (9), die auf dem Verbindungspfosten (72) montiert ist und mindestens zwei parallele Schneidkanten (C1, C3) enthält, die angeordnet sind, um den Rand des Gehäuses (1) zu entgraten,
- Führungsmittel (8), die auf der Grundplatte (71) bereitgestellt sind und dazu bestimmt sind, mit dem zu entgratenden Rand in Kontakt zu sein, um dem Profil des zu entgratenden Randes zu folgen, ohne die Ausrichtung der Drehplatte (9) zu verändern, wobei die Führungsmittel (8) mindestens zwei parallele Rollen (81, 82) enthalten, die dazu bestimmt sind, gleichzeitig mit dem zu entgratenden Rand in Kontakt zu sein.

7. Werkzeug nach Anspruch 6, wobei die Drehplatte (9) auf dem Verbindungspfosten (72) montiert ist, sodass jede Schneidkante (C1, C3) einen Grat bearbeitet, der zwischen den zwei Rollen (81, 82) liegt, wenn die zwei Rollen mit einem Abschnitt des zu entgratenden Randes in Kontakt sind.

8. Werkzeug nach Anspruch 6 oder 7, wobei die Kanten teilweise aus dem Verbindungspfosten (72) hervorstehen.

9. Werkzeug nach einem der Ansprüche 6 bis 8, wobei der Verbindungspfosten (72) sich zwischen den Rollen (81, 82) erstreckt, vorzugsweise in gleichem Abstand zu den Rollen (81, 82).

10. Werkzeug nach Anspruch 4 bis 6, **dadurch gekennzeichnet, dass** die Rollen (81, 82) eine zylindrische Form aufweisen, die sich von der Grundplatte (74) entlang paralleler Ausrichtungsachsen (B1, B2) erstrecken und jeweils senkrecht zur durch die Grundplatte (71) definierten Ebene sind.

11. Werkzeug nach einem der Ansprüche 4 bis 9, wobei ein Ende des Verbindungspfostens (72) im Körper (6) montiert ist, wobei elastische Mittel (63, 64) zwischen dem Ende des Verbindungspfostens (72) und dem Körper (6) bereitgestellt sind, sodass der Schneidaufwand der Drehplatte (9) am zu entgratenden Rand kalibriert wird.

12. Werkzeug nach einem der Ansprüche 4 bis 6, 9 und 11, wobei die Drehplatte (9) eine Form einer Raute besitzt.

## Claims

1. Method for machining a casing (1) of an aircraft turboshaft, the casing (1) extending along a casing axis (W) and comprising an upstream edge (BM) and a downstream edge (BV) with respect to the direction of the air stream inside the turboshaft, the method being **characterised in that** it comprises the following steps:
- positioning the casing (1) in a chassis (2);
- rotationally driving, about the casing axis (w), the chassis (2) at a rotational milling speed;
- milling the downstream edge (BV) and/or the upstream edge (BM) of the casing (1) with a milling tool (31) of a milling device (3) so as to correct an axial length of the casing (1) along the casing axis (W), machining an edge of the casing (1) with a milling tool (31) during the rotation of the casing (1) at the rotational milling speed; and
- deburring said edge of the casing (1) so as to remove at least one burr formed on said edge according to the milling step;
- the deburring step comprising the use of a scraper tool (4) equipping the milling device (3) during the deburring and machining step of the burr by turning with the scraper tool (4) during the rotation of the casing (1) at the rotational milling speed.

2. Method according to claim 1, wherein the casing (1) comprises an inner part of the edge rotated towards the casing axis (W) and an outer part of the edge opposite said inner part, the inner part of said edge and the outer part of said casing edge are successively machined during the deburring step by maintaining the casing (1) positioned in the chassis (2).

3. Method according to claim 2, wherein, during the deburring step, the upstream (BM) and downstream (BV) edges of the casing (1) are machined by maintaining the casing (1) positioned in the chassis (2).

4. Method according to claim 1, wherein the deburring step is carried out by replacing the milling tool (31) by the scraper tool (4).

5. Method according to claim 1 or 4, wherein the deburring step is carried out after the milling step.

6. Scraper tool (4) for the deburring the edge of a casing (1) of an aircraft turboshaft, the scraper tool (4) being intended to equip a milling device (3) and comprising a body (6) comprising, at a first end, means for connecting (5) to the milling device (3) and at a second end, a deburring module (7),
**characterised in that** the deburring module comprises:
- a connection pole (72),
- a plate (71) rotationally mounted about said connection pole (72),
- a turning lathe platelet (9) mounted on the connection pole (72) and comprising at least two parallel cutting edges (C1, C3) which are arranged to deburr the edge of the casing (1),
- guiding means (8) provided on said plate (71) and intended to be in contact with the edge to be deburred so as to follow the profile of the edge to be deburred without changing the orientation of the turning lathe (9), the guiding means (8) comprising at least two parallel rollers (81, 82) intended to be simultaneously in contact with the edge to be deburred.

7. Tool according to claim 6, wherein the turning lathe platelet (9) is mounted on the connection pole (72) so that each cutting edge (C1, C3) machines a burr located between the two rollers (81, 82) when the two rollers are in contact with a portion of the edge to deburr.

8. Tool according to claim 6 or 7, wherein the edges partially protrude from the connection pole (72).

9. Tool according to one of claims 6 to 8, wherein the connection pole (72) extends between the rollers (81, 82) preferably at an equal distance from the rollers (81, 82).

10. Tool according to claims 4 to 6, **characterised in that** the rollers (81, 82) are cylindrical in shape and extend from the plate (74) along the axes (B1, B2), each oriented parallel and perpendicular to the plane defined by said plate (71).

11. Tool according to one of claims 4 to 9, wherein an end of the connection pole (72) is mounted in the body (6), elastic means (63, 64) being provided between said end of the connection pole (72) and said body (6) so as to calibrate the cutting force exerted by the turning lathe platelet (9) on the edge to be deburred.

12. Tool according to one of claims 4 to 6, 9 and 11, wherein the turning lathe platelet (9) has a diamond shape.
